# EUROPÄISCHE PATENTSCHRIFT

(11) **EP 2 640 542 B1**
(45) Veröffentlichungstag und Bekanntmachung des Hinweises auf die Patenterteilung: **16.11.2016**
(21) Anmeldenummer: 12712536.7
(22) Anmeldetag: 09.03.2012
(51) Int. Cl.: H04N 5/232

(54) **VORRICHTUNG UND VERFAHREN ZUR ÜBERWACHUNG EINES LICHTBOGENPROZESSES**
DEVICE AND METHOD FOR MONITORING AN ARC PROCESS
DISPOSITIF ET PROCÉDÉ DE SURVEILLANCE D'UN TRAITEMENT À L'ARC ÉLECTRIQUE

(30) Priorität: 10.03.2011 AT 3322011
(43) Veröffentlichungstag der Anmeldung: 25.09.2013
(73) Patentinhaber: Fronius International GmbH, 4643 Pettenbach (AT)
(72) Erfinder: PUCHBERGER, Franz, 4225 Luftenberg (AT); REINTHALER, Günther, 4715 Taufkirchen/Trattnach (AT); ENNSBRUNNER, Helmut, 4060 Leonding (AT); DIETERMAYR, Bernhard, 4600 Wels (AT)
(74) Vertreter: Sonn & Partner Patentanwälte
(86) Internationale Anmeldenummer: PCT/AT2012/000057
(87) Internationale Veröffentlichungsnummer: WO 2012/119170

(56) Entgegenhaltungen:
- DE-T2- 69 213 121
- FR-A1- 2 742 287
- JP-A- 6 304 754
- JP-A- 2005 193 277
- JP-A- 2007 181 871
- US-A1- 2005 103 766

## Beschreibung

Die Erfindung betrifft ein Verfahren zur Überwachung eines mit einem Brenner durchgeführten Lichtbogenprozesses, insbesondere Schweißprozesses, wobei der Brenner eine Pendelbewegung mit einer Pendelfrequenz ausführt, und mit Hilfe eines mit dem Brenner verbundenen, zumindest eine Kamera umfassenden Überwachungssystems Bilder der Umgebung des Lichtbogens mit einer Bildwiederholfrequenz aufgenommen werden und die Bilder auf einer Anzeigevorrichtung dargestellt werden.

Weiters betrifft die Erfindung eine Vorrichtung zur Durchführung eines oben genannten Verfahrens zur Überwachung eines mit einem eine Pendelbewegung mit einer Pendelfrequenz ausführenden Brenner durchgeführten Lichtbogenprozesses, insbesondere Schweißprozesses, mit einem mit dem Brenner verbundenen, zumindest eine Kamera umfassenden Überwachungssystem zur Aufnahme von Bildern der Umgebung des Lichtbogens mit einer Bildwiederholfrequenz, und eine Anzeigevorrichtung zur Darstellung der Bilder.

Systeme zur Überwachung von Lichtbogenprozessen, insbesondere Schweißprozessen, zur Beobachtung des Arbeitsvorganges und zum Ziehen von Schlüssen auf die Qualität des Arbeitsvorganges sind seit einiger Zeit bekannt. Beispielsweise kann durch das Aufnehmen einer Schweißnaht mit einer Kamera die Qualität der Schweißung beurteilt werden und es können allenfalls Schweißparameter zur Verbesserung der Qualität verändert werden. Ein derartiges System wird beispielsweise in der WO 96/13354 A1 beschrieben.

Darüber hinaus sind Überwachungssysteme bekannt geworden, die eine optimale Ausrichtung des Schweißbrenners in Bezug auf das zu bearbeitende Werkstück ermöglichen. Ein derartiges Überwachungs-System ist beispielsweise aus der JP 6304754 A bekannt.

Die JP 2005-193277 A und die JP 2007-181871 A offenbaren ein Verfahren zur Überwachung eines mit einem Brenner durchgeführten Lichtbogenprozesses, wobei der Brenner eine Pendelbewegung mit einer Pendelfrequenz durchführt und eine Vorrichtung zur Durchführung eines Verfahrens zur Überwachung eines mit einem eine Pendelbewegung mit einer Pendelfrequenz ausführenden Brenner durchgeführten Lichtbogenprozesses.

Aus der DE 692 13 121 T2, der FR 2 742 287 A1 und der US 2005/103766 A1 sind Verfahren bzw. Vorrichtungen zur Aufnahme von Bildern des Schweißgebiets von Schweißverfahren bekannt geworden.

Die vorliegende Erfindung bezieht sich nicht nur auf Schweißprozesse, sondern auch auf andere Lichtbogenprozesse, wie zum Beispiel Verfahren zur Bearbeitung von Oberflächen, Schneidverfahren oder Auftragsverfahren unter der Verwendung von Lichtbögen.

Bei manchen Arbeitsvorgängen ist es erforderlich bzw. vorteilhaft, den Brenner, insbesondere Schweißbrenner, in einer Pendelbewegung über die Oberfläche des zu bearbeitenden Werkstücks bzw. über den Spalt zwischen zwei zu verbindenden Werkstücken zu bewegen. Dadurch kann eine raschere Oberflächenbearbeitung bzw. höhere Spaltüberbrückbarkeit erzielt werden. Bei derartigen Verfahren, bei welchen der Brenner eine Pendelbewegung vollzieht, ist eine Überwachung des Lichtbogenprozesses mit herkömmlichen Verfahren bzw. Vorrichtungen nur schwer oder mit großem Aufwand möglich.

Wird das Überwachungssystem bzw. zumindest die Kamera des Überwachungssystems wie üblich mit dem Brenner verbunden, vollzieht die Kamera die Pendelbewegung des Brenners und liefert somit ein Bild, in dem sich das Werkstück und somit die mit dem Lichtbogen bearbeitete Stelle (beim Schweißprozess die Schweißraupe) ständig bewegt. Aus einer solchen Bildfolge mit permanent bewegtem Werkstück kann der Benutzer, beispielsweise Schweißer, nur schwer Details von der in Bearbeitung befindlichen Stelle am Werkstück bzw. schon bearbeiteten Stellen am Werkstück bzw. noch zu bearbeitenden Stellen am Werkstück erkennen und daher keine zuverlässige Rückschlüsse auf die Qualität des Lichtbogenprozesses ziehen.

Ein stehendes Bild könnte dann erzielt werden, wenn die Kamera auf einem eigenen Manipulator unabhängig von dem mit dem Brenner verbundenen Manipulator befestigt wird und dem Brenner entsprechend synchronisiert nachgeführt wird, ohne die Pendelbewegung zu vollziehen. Dies stellt jedoch einen hohen konstruktiven Aufwand dar.

Eine verfahrenstechnische Möglichkeit der Lösung des Problems wäre die Synchronisierung der Bildwiederholfrequenz der Kamera bzw. des Überwachungssystems mit der Pendelfrequenz des Brenners. In der Praxis sind derartige Verfahren jedoch nachteilig, da die Bildaufnahme durch den Roboter getriggert werden muss. Weiters würde durch eine solche Synchronisierung die Bildwiederholfrequenz auf die doppelte Frequenz der Pendelbewegung nach oben limitiert werden und die oszillierende Pendelbewegung des Brenners verschwindet aus der Aufnahme.

Die Aufgabe der vorliegenden Erfindung besteht daher in der Schaffung eines oben genannten Verfahrens und einer entsprechenden Vorrichtung, durch welche eine optimale Überwachung des Lichtbogenprozesses auch bei Brennern, die eine Pendelbewegung vollziehen, durchgeführt werden kann. Das Verfahren bzw. die Vorrichtung soll möglichst einfach und kostengünstig realisierbar sein. Nachteile des Standes der Technik sollen vermieden oder zumindest reduziert werden.

Gelöst wird die erfindungsgemäße Aufgabe in verfahrensmäßiger Hinsicht dadurch, dass eine Verschiebung des aktuellen Bildes zum vorherigen Bild ermittelt wird, das aktuelle Bild um den Anteil der ermittelten Verschiebung in Richtung der Pendelbewegung verschoben, und das verschobene aktuelle Bild angezeigt wird. Die Verschiebung des aktuellen Bildes kann auch negativ sein, d.h. in entgegengesetzte Richtung der Pendelbewegung. Durch die erfindungsgemäße Bildverarbeitung wird somit die Verschiebung von einem Bild zum nächsten Bild aufgrund der Pendelbewegung des Brenners, welche das Überwachungssystem mit vollzieht, berücksichtigt und kompensiert, wodurch die normalerweise auftretende Pendelbewegung des Werkstücks im Bild eliminiert werden kann. Dadurch wird in vorteilhafter Weise erreicht, dass nunmehr das Werkstück oder ein spezielles Merkmal am Werkstück, wie eine Schweißraupe im Fall eines Schweißprozesses, still steht und ein Teil des Brenners, insbesondere die im Randbereich des Bildes ersichtliche Gasdüse des Brenners, entsprechend der Verschiebung des Bildes bewegt wird. Man kann also sagen, dass man die Bilder direkt vom Brenner aus aufnimmt und die Bilder derart verschoben werden, dass das Werkstück oder ein spezielles Merkmal am Werkstück, wie eine Schweißraupe im Fall eines Schweißprozesses, still steht, jedoch die Bewegung des Brenners dargestellt wird. Der Benutzer, beispielsweise Schweißer, kann somit ähnlich wie bei Lichtbogenprozessen, bei welchen der Brenner keine Pendelbewegung sondern eine bloße Vorwärtsbewegung vollzieht, die Umgebung des Lichtbogens bzw. das Schmelzbad optimal beobachten und somit zuverlässige Rückschlüsse auf die Qualität des Lichtbogenprozesses ziehen. Das Verfahren lässt sich mit relativ geringem Aufwand hinsichtlich der Rechenleistung des für die Verarbeitung zuständigen Rechners und somit relativ niedrigen Kosten einfach implementieren. Darüber hinaus können bestehende Systeme relativ einfach nachgerüstet werden, beispielsweise durch Laden entsprechender Software auf bereits vorhandene Computer oder den Einbau entsprechender Mikrocomputer. Mit Ausnahme des erforderlichen Computers bzw. Mikrocomputers sind keine weiteren Hardware-technischen Voraussetzungen notwendig. Es können herkömmliche Überwachungssysteme verwendet werden, welche zumindest eine Kamera, beispielsweise einen Active Pixel Sensor (CMOS-Sensor), und vorzugsweise zumindest eine Blitzlampe oder andere Lichtquelle mit entsprechend hoher Lichtstärke, um trotz des grellen Lichtbogens des Lichtbogenprozesses kontrastreiche Bilder zu erzielen, umfassen. Ein zusätzlicher positiver Effekt ergibt sich beim erfindungsgemäßen Verfahren dadurch, dass durch die geänderten Lichtverhältnisse aufgrund der Verschiebung des Überwachungssystems bzw. der Kamera-Beleuchtungs-Einheit relativ zum Werkstück eine Art 3D-Effekt erzielt wird, durch den die Qualität der Bildfolge noch weiter verbessert werden kann und die Beurteilung des Ergebnisses des Lichtbogenprozesses (z.B. der Schweißraupe) für den Benutzer noch weiter erleichtert wird.Es resultiert quasi ein 3D-Effekt, da das Ergebnis des Lichtbogenprozesses aufgrund der Brennerbewegung mit der Pendelfrequenz aus verschiedenen Winkeln betrachtet wird. Wesentlich ist hierbei, dass der Benutzer mit einem derartigen Verfahren unmittelbar, also nur mit einer sehr kurzen Verzögerung für die Bildverschiebungsberechnung und Darstellung den Lichtbogenprozess quasi online verfolgen kann.

Die Verschiebung des aktuellen Bildes zum vorherigen Bild kann mit verschiedenen Methoden ermittelt werden, beispielsweise durch Korrelation des aktuellen Bildes mit dem vorigen Bild. Bei einem derartigen Korrelationsverfahren wird das Ergebnis der Kreuzkorrelation des vorherigen Bildes mit dem aktuellen Bild berechnet. Vorteilhaft ist es, diese Kreuzkorrelation mittels Multiplikation im Frequenzraum durchzuführen, wobei die Transformation und Rücktransformation mittels Fast Fourier-Transformation (FFT) bzw. Inverse Fast Fourier-Transformation (IFFT) durchgeführt werden, da dies gegenüber der Berechnung im Bildbereich weniger rechenintensiv ist und somit rascher Ergebnisse erhalten werden können. Durch das Korrelationsverfahren wird anhand ortsfester Merkmale im Werkstück, welche im aktuellen und vorigen Bild abgebildet sind, die Verschiebungen zwischen den Bildern verlässlich ermittelt. Im Falle eines Schweißverfahrens eignen sich charakteristische Punkte im Bild auf der bereits erstarrten Schweißraupe für derartige Korrelationsverfahren besonders. Ebenso können Werkstückhalter, Schweißspritzer, usw. als Punkte verwendet werden. Wichtig für die zuverlässige Ermittlung der Verschiebung vom vorigen zum aktuellen Bild ist, dass die beiden Bilder einander ausreichend überlappen und der Bereich hinter dem Lichtbogenprozess ausreichend stark ausgeleuchtet ist, um gleiche Punkte in aufeinanderfolgenden Bildern wieder exakt zuordnen zu können.

Da für die Beurteilung des Lichtbogenprozesses die dem Lichtbogen nachfolgende Umgebung wichtig ist, werden die Bilder vorzugsweise von der dem Lichtbogen nachlaufenden Umgebung aufgenommen. Das bedeutet, dass das Überwachungssystem auf den Bereich hinter dem Lichtbogen gerichtet wird. Im Falle eines Schweißprozesses wird das Überwachungssystem insbesondere auf einen erstarrten Bereich der Schweißraupe gerichtet. Zur besseren Orientierung des Benutzers auf den resultierenden Bildern kann auch ein Teil des Brenners, wie die Gasdüse, am Rand des Bildes enthalten sein. Dadurch erhält der Benutzer die Information über den Pendelhub des Brenners, da dieser gemäß der Erfindung pendelnd dargestellt wird, wobei jener Bereich der durch den Lichtbogenprozess bearbeitet wurde, beispielsweise die Schweißraupe, durch die Verschiebung der Bilder im Wesentlichen ortsfest dargestellt wird.

Wenn vor der Ermittlung der Verschiebung Ausschnitte des vorigen und allenfalls aktuellen Bildes gebildet werden, kann die Korrelation und somit die Bestimmung der Verschiebung zwischen den Bildern verbessert werden. Dabei ist es von Vorteil, einen kleineren Ausschnitt des vorigen Bildes zu wählen, welcher mit einem größeren Ausschnitt des aktuellen Bildes oder mit dem gesamten aktuellen Bild entsprechend korreliert wird. Bereiche in den Bildern, die keine Information für die Korrelation liefern, werden vorteilhafterweise ausgenommen. Beispielsweise kann der Bereich des Brenners vor der Berechnung sowohl aus dem vorigen als auch dem aktuellen Bild eliminiert werden. Nach dem Zusammenfügen der Bilder führt der Brenner die Pendelbewegung durch, wohingegen die durch den Lichtbogenprozess bearbeitete Stelle, also beispielsweise die Schweißraupe, ortsfest dargestellt wird.

Weiters kann es von Vorteil sein, wenn die Bilder vor der Ermittlung der Verschiebung gefiltert und skaliert werden. Durch entsprechende Software-technische oder Hardware-technische Filterung der Bilder kann deren Qualität verbessert bzw. können Schwankungen in der Beleuchtung korrigiert werden und somit eine Erleichterung für die nachfolgenden Korrelationsverfahren oder dergleichen erzielt werden. Durch entsprechende Skalierung der Bilder nach unten kann der Rechenaufwand für die Ermittlung der Verschiebung zwischen den Bildern reduziert werden.

Um zu verhindern, dass der Rand der resultierenden angezeigten Bilder im Takt der Pendelfrequenz seitlich verschoben wird, ist es von Vorteil, wenn lediglich ein Teilbild angezeigt wird. Dabei werden die seitlichen Ränder der Bilder zumindest um die maximale Amplitude, um die der Brenner die Pendelbewegung vollzieht, beschnitten.

Von Vorteil ist es, eine allfällige Drift der Summe der ermittelten Verschiebungen zwischen den Bildern zu ermitteln und zu korrigieren. Dies kann durch entsprechende Berechnung der absoluten Verschiebung und Ermittlung des niederfrequenten Anteils der aufsummierten Verschiebung erfolgen.

Um eine bessere Qualität der Bilder zu erzielen, kann der Lichtbogen entsprechend abgeschattet werden. Dazu können einfache, am Brenner oder dem Überwachungssystem angeordnete, Abdeckelemente dienen. Auch durch die spezielle Positionierung des Überwachungssystems bzw. von Teilen des Überwachungssystems relativ zum Brenner kann durch den Brenner selbst bzw. durch die Gasdüse eine Abschattung des Lichtbogens erfolgen.

Zusätzlich zur erfindungsgemäßen Darstellung der Bilder kann auch die tatsächliche Pendelfrequenz des Brenners aus den Bildern ermittelt und vorzugsweise zusammen mit den Bildern oder Teilbildern angezeigt werden.

Für eine zuverlässige Ermittlung der Pendelfrequenz aus den Bildern muss das Abtasttheorem erfüllt sein, also die Bildwiederholfrequenz zumindest doppelt so groß wie die Pendelfrequenz gewählt werden. Bei üblichen Pendelfrequenzen bis zu 5 Hz ergibt sich somit eine minimale Bildwiederholfrequenz von 10 Hz.

Neben der Darstellung der durch den Lichtbogenprozess bearbeiteten Stellen des Werkstücks kann es von Vorteil sein, auch zusätzliche Prozessparameter an der entsprechenden Anzeigevorrichtung darzustellen. Im Falle eines Schweißprozesses können beispielsweise der Schweißstrom, die Schweißspannung, die Pulsfrequenz, die Drahtvorschubgeschwindigkeit, das Drahtmaterial oder dergl. angezeigt werden und dadurch dem Benutzer wichtige zusätzliche Informationen liefern.

Für spätere Auswertungen der Daten kann es von Vorteil sein, die Bilder oder Teilbilder allenfalls zusammen mit der tatsächlichen Pendelfrequenz und Prozessparametern zu speichern.

Weiters kann es von Vorteil sein, die Bilder oder Teilbilder allenfalls zusammen mit der tatsächlichen Pendelfrequenz und den Prozessparametern zu übertragen. Eine derartige Übertragung kann über entsprechende Netzwerke an beliebige Ziele vorgenommen werden, wo eine Auswertung der Daten, beispielsweise zum Zweck der Verbesserung der Qualität des Lichtbogenprozesses oder für statistische Zwecke, stattfinden kann.

Gelöst wird die erfindungsgemäße Aufgabe auch durch eine oben genannte Vorrichtung, bei der eine Einrichtung zur Verarbeitung der aufgenommenen Bilder vorgesehen ist, welche Verarbeitungseinrichtung zur Ermittlung der Verschiebung des aktuellen Bildes zum vorherigen Bild ausgebildet ist, und die Anzeigevorrichtung zur Darstellung des um den Anteil der ermittelten Verschiebung in Richtung der Pendelbewegung verschobenen aktuellen Bildes ausgebildet ist. Zu den mit dieser Vorrichtung erzielbaren Vorteilen wird auf die obige Beschreibung zum Verfahren verwiesen.

Die Verarbeitungseinrichtung ist in vorteilhafter Weise zur Bildung einer Korrelation eines Ausschnittes des vorigen Bildes mit dem aktuellen Bild oder einem Ausschnitt des aktuellen Bildes ausgebildet.

Weiters kann es von Vorteil sein, wenn die Verarbeitungseinrichtung eine Schnittstelle, beispielsweise eine Ethernet- oder USB-Schnittstelle, aufweist. Über derartige Schnittstellen können die Daten an beliebige Stellen oder Geräte übertragen werden.

Um die Umgebung hinter dem Lichtbogen überwachen zu können, ist das Überwachungssystem zur Aufnahme von Bildern der dem Lichtbogen nachlaufenden Umgebung am Brenner entsprechend befestigt.

Zur Erzielung einer besseren Qualität der resultierenden Bilder kann am Brenner eine Einrichtung zur Abschattung des relativ grellen Lichtbogens angeordnet sein. Wie bereits oben erwähnt, kann durch entsprechende Anordnung des Überwachungssystems selbst oder Teilen davon auch direkt die Gasdüse für eine Abschattung des Lichtbogens verwendet werden.

Zum Archivieren der Daten kann ein Speicher vorgesehen sein. Neben den Bildern und Teilbildern können auch die allenfalls ermittelte tatsächliche Pendelfrequenz oder Prozessparameter gespeichert werden.

Schließlich kann es von Vorteil sein, wenn eine Einrichtung zur Übertragung der Bilder und Teilbilder vorgesehen ist. Eine derartige Übertragungseinrichtung kann durch eine Anbindung an ein Netzwerk oder eine Funkeinrichtung gebildet sein.

Die vorliegende Erfindung wird anhand der beigefügten Zeichnungen näher erläutert.

### Darin zeigen

Fig. 1 eine schematische Darstellung einer Schweißmaschine bzw. eines Schweißgerätes;
Fig. 2 eine schematische Prinzipskizze einer Vorrichtung zur Durchführung eines Verfahrens zur Überwachung eines Schweißprozesses;
Fig. 3 eine Prinzipskizze der bei einem Pendelschweißverfahren aufgenommenen Bilder;
Fig. 4 Beispiele einiger bei einem Pendelschweißverfahren aufgenommener Bilder;
Fig. 5 die nach Anwendung des erfindungsgemäßen Verfahrens auf die Bilder gemäß Fig. 4 resultierenden Bilder oder Teilbilder; und
Fig. 6 ein Flussdiagramm zur Veranschaulichung des erfindungsgemäßen Verfahrens.

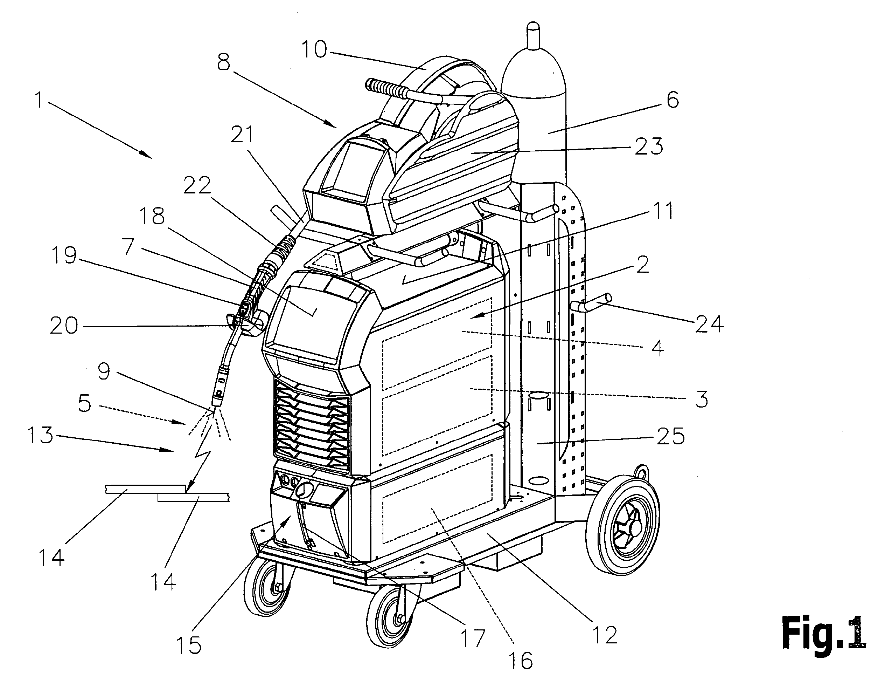

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Hierbei wird von einem sogenannten kompakten Schweißgerät 1 gesprochen. Dabei kann das Drahtvorschubgerät 8 auch direkt auf das Schweißgerät 2 aufgesetzt werden, d.h. das Gehäuse 11 der Stromquelle 2 kann an der Oberseite zur Aufnahme des Drahtvorschubgerätes 8 ausgebildet sein, sodass der Fahrwagen 12 entfallen kann.

Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung (nicht dargestellt) für das weitere Potential, insbesondere das Masse-Kabel, mit der Stromquelle 2 verbunden ist und somit über den Lichtbogen 13 bzw. den gebildeten Plasmastrahl für einen Prozess ein Stromkreis aufgebaut werden kann. Bei Verwendung eines Brenners mit internem Lichtbogen 13 sind die beiden Schweißleitungen zum Brenner geführt, sodass im Brenner ein entsprechender Stromkreis aufgebaut werden kann, wie dies bei Plasma-Brennern der Fall sein kann.
Zum Kühlen des Schweißbrenners 7 kann der Schweißbrenner 7 über ein Kühlgerät 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden werden. Bei der Inbetriebnahme des Schweißbrenners 7 wird das Kühlgerät 15, insbesondere eine für die im Wasserbehälter 16 angeordnete Flüssigkeit verwendete Flüssigkeitspumpe, gestartet und somit eine Kühlung des Schweißbrenners 7 bewirkt. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8, verbunden. Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einen Knickschutz 22 am Schweißbrenner 7 befestigt ist. Im Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine nicht dargestellte Kupplungsvorrichtung an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 21 gewährleistet ist, kann das Schlauchpaket 21 über eine Zugentlastungsvorrichtung (nicht dargestellt) mit dem Gehäuse 11 der Stromquelle 2 oder dem Drahtvorschubgerät 8 verbunden sein.

Grundsätzlich müssen für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden. So ist es beispielsweise möglich, dass der Schweißbrenner 7 als luftgekühlter Schweißbrenner 7 ausgeführt werden kann, sodass beispielsweise das Kühlgerät 15 entfallen kann. Man kann also sagen, dass das Schweißgerät 1 zumindest durch die Stromquelle 2, und das Drahtvorschubgerät 8, gegebenenfalls auch durch das Kühlgerät 15 gebildet wird, wobei diese Komponenten auch in einem gemeinsamen Gehäuse 11 angeordnet sein können. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6 usw., angeordnet bzw. eingesetzt werden können.

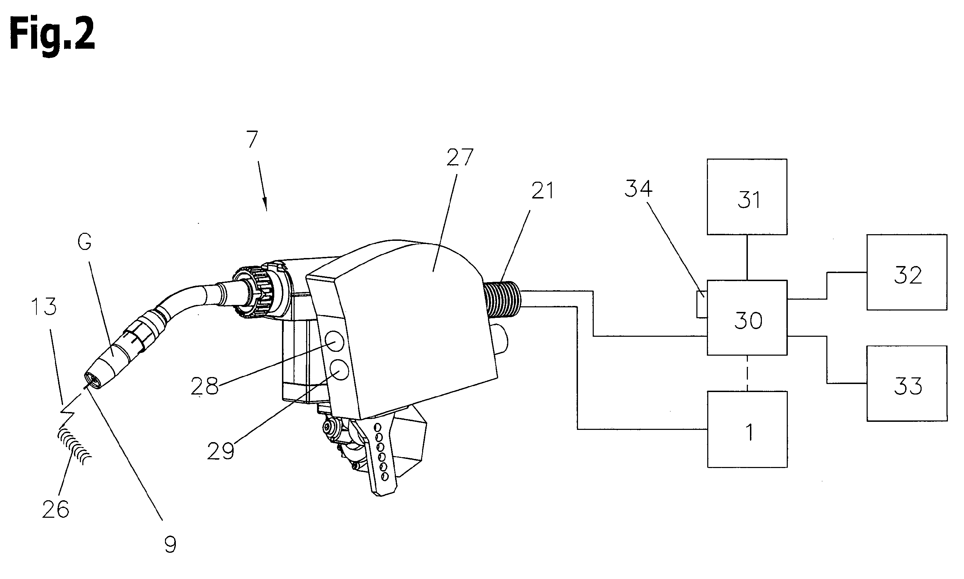

Fig. 2 zeigt als Beispiel einen Schweißbrenner 7 zur Durchführung eines Schweißprozesses. Beim Schweißprozess wird zwischen dem Schweißbrenner 7 und dem zu bearbeitenden Werkstück ein Lichtbogen 13 gezündet und mit Hilfe eines über einen Schweißdraht 9 zugeführten Materials ein Spalt zwischen zwei Werkstücken überbrückt oder die Oberfläche des Werkstücks beschichtet, also ein Lichtbogenprozess durchgeführt. Bei großen Spaltbreiten oder breiten Oberflächen kann es von Vorteil sein, wenn der Schweißbrenner 7 in einer Pendelbewegung über das Werkstück bzw. den Spalt zwischen zwei Werkstücken geführt wird. Als Resultat des Schweißprozesses ist eine Schweißraupe 26 dargestellt. Zur Überwachung des Schweißprozesses ist am Schweißbrenner 7 ein Überwachungssystem 27 befestigt. Das Überwachungssystem 27 umfasst zumindest eine Kamera 28 und vorzugsweise eine Lichtquelle 29. Die Lichtquelle 29 ist beispielsweise durch eine Blitzlampe gebildet, welche synchron mit der Öffnung der Blende der Kamera 28 Lichtblitze aussendet, um trotz des relativ grellen Lichtbogens 13 Bilder mit ausreichender Qualität erzielen zu können. Der Schweißbrenner 7 ist über entsprechende, nicht dargestellte, Befestigungseinrichtungen mit einem Roboterarm verbunden. Über ein Schlauchpaket 21 werden die Leitungen und Zuführungen für das Schutzgas und den Schweißdraht 9 zu einem Schweißgerät 1 geführt. Über dasselbe Schlauchpaket 21 oder ein gesondertes Schlauchpaket können auch die Leitungen des Überwachungssystems 27 an eine entsprechende Verarbeitungseinrichtung 30 geführt werden. In dieser Verarbeitungseinrichtung 30 erfolgt die erfindungsgemäße Bearbeitung der Bilder zur Überwachung des Lichtbogenprozesses. Die entsprechend verarbeiteten Bilder werden an einer Anzeigevorrichtung 31 dargestellt. Die Anzeigevorrichtung 31 kann in der Nähe des Schweißgeräts 1 oder auch entfernt davon angeordnet sein. Zusätzlich kann die Verarbeitungseinrichtung 30 mit einem Speicher 32 zum Speichern der Bilder sowie allfälliger weiterer Daten, wie zum Beispiel Prozessdaten, verbunden sein. Zum Erhalt der Prozessdaten ist es von Vorteil, wenn das Schweißgerät 1 mit der Verarbeitungseinrichtung 30 verbunden ist, wie anhand der strichlierten Linie dargestellt ist. Um eine Übertragung der Bilder sowie davon abgeleiteter Daten und allfälliger Prozessdaten an beliebige Ziele zu ermöglichen, kann die Verarbeitungseinrichtung 30 mit einer Übertragungsvorrichtung 33 verbunden sein. Die Übertragungsvorrichtung 33 kann durch eine Netzwerkverbindung oder auch eine Sendeinrichtung zur drahtlosen Übertragung der Daten gebildet sein (nicht dargestellt). Zusätzlich kann die Verarbeitungseinrichtung 30 eine Schnittstelle 34 aufweisen, über die Daten an andere Stellen übertragen oder auch externe Daten empfangen werden können.

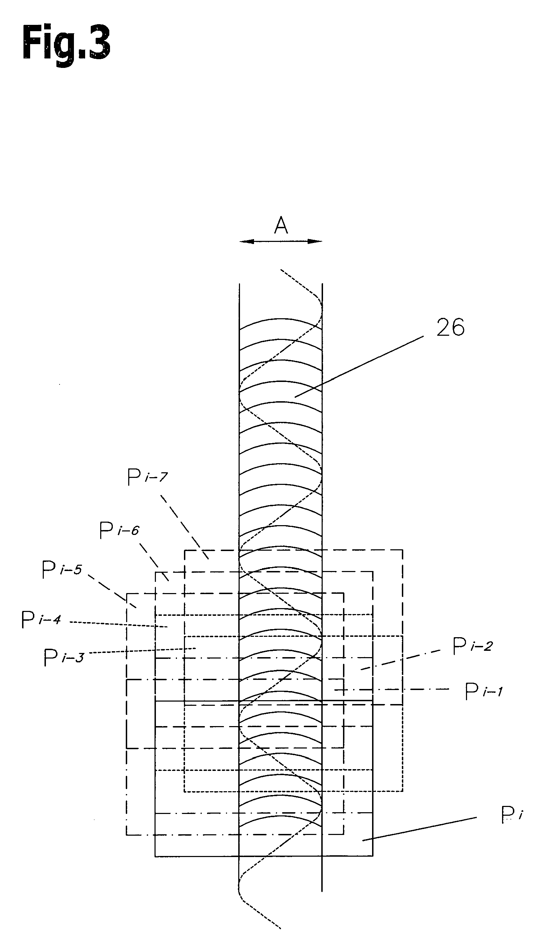

Fig. 3 zeigt das Prinzip der Überwachung eines Lichtbogenprozesses, bei dem der Brenner 7 eine Pendelbewegung vollzieht. Im Falle eines Schweißprozesses wird der Brenner 7 entlang der strichliert gezeichneten sinusförmigen Bahn mit einer vorgegebenen Pendelfrequenz f_{P} und Pendelamplitude A bewegt. Die Pendelfrequenz f_{P} kann variabel sein. Mit einer am Brenner 7 befestigten Kamera 28 werden mit einer vorgegebenen Bildfrequenz f_{B} Bilder Pᵢ aufgenommen, welche entsprechend der Pendelbewegung des Brenners 7 seitlich verschoben und entsprechend der Vorschubgeschwindigkeit des Brenners 7 auch in Vorwärtsrichtung des Lichtbogenprozesses bewegt sind. Das aktuelle Bild Pᵢ ist mit einer durchgezogenen Linie symbolisiert, während die vorherigen Bilder Pᵢ₋₁ usw. strichliert bzw. strichpunktiert dargestellt sind. Würde nun die Bildfolge der Bilder Pᵢ an einer Anzeigevorrichtung 31 dargestellt, würde sich die Schweißraupe 26 entsprechend der Pendelfrequenz f_{P} auf der sinusförmigen Bahn hin- und herbewegen und eine Beobachtung derselben nur sehr schwer möglich sein.

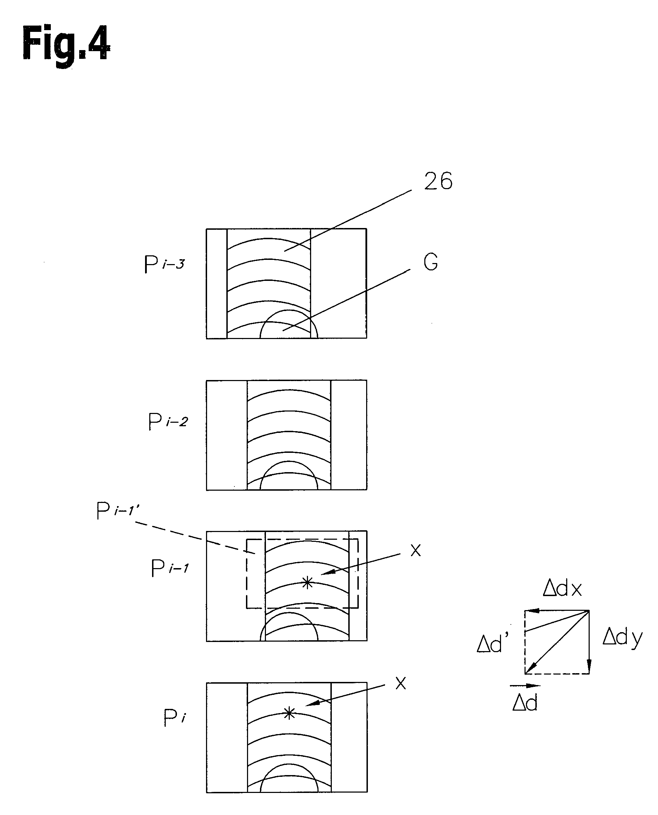

Fig. 4 zeigt als Beispiel vier Bilder Pᵢ₋₃ bis Pᵢ einer solchen Bildfolge, welche ohne Anwendung des erfindungsgemäßen Verfahrens resultieren würde. Die Schweißraupe 26 wandert aus Sicht der Kamera 28 von einem Bild Pᵢ zum nächsten hin und her, wobei die zumindest teilweise im Bild Pᵢ sichtbare Gasdüse G des Brenners 7 einen Fixpunkt darstellt. Durch das Wandern der Schweißraupe 26 ist somit keine genaue Beobachtung des Schweißresultats möglich. Anhand des aktuellen Bildes Pᵢ und des vorigen Bildes Pᵢ₋₁ wird nunmehr das erfindungsgemäße Verfahren näher erläutert. Die Verschiebung Δ̅*̅d̅*̅ zwischen dem aktuellen Bild Pᵢ und dem vorigen Bild Pᵢ₋₁ wird beispielsweise dadurch bestimmt, dass die beiden Bilder Pᵢ, Pᵢ₋₁ miteinander korreliert werden. Zu diesem Zweck wird vorzugsweise die Kreuzkorrelation zwischen einem Ausschnitt Pᵢ₋₁' des vorigen Bildes Pᵢ₋₁ und einem Ausschnitt Pᵢ' des aktuellen Bildes Pᵢ oder dem gesamten aktuellen Bildes Pᵢ berechnet. Entsprechend ist die Position des Ausschnitts Pᵢ' bei jedem Bild Pᵢ gleich, also ortsfest zum Fixpunkt des Bildes Pᵢ. Dabei wird vorzugsweise die Kreuzkorrelation über einen Fast Fourier-Transformation (FFT)-Algorithmus und eine Multiplikation im Frequenzraum mit anschließender Rücktransformation durchgeführt, was im Gegensatz zu anderen Methoden zur Berechnung der Kreuzkorrelation weniger rechenintensiv ist und somit den Aufwand reduziert. Durch die Bildung eines Ausschnitts Pᵢ₋₁' des vorigen Bildes Pᵢ₋₁ können Bereiche des Bildes Pᵢ₋₁ eliminiert werden, welche für das Korrelationsverfahren nicht relevant sind bzw. diese sogar erschweren. Beispielsweise kann der Bereich der Gasdüse G und des Lichtbogens zur Berechnung eliminiert bzw. ausgeblendet werden, und jener Ausschnitt Pᵢ₋₁' des Bildes Pᵢ₋₁ zum Berechnungsverfahren herangezogen werden, in dem entsprechend markante Punkte x zu erwarten sind, anhand derer die Verschiebung Δ̅*̅d̅*̅ leichter ermittelt werden kann. Dies ist im Falle eines Schweißverfahrens, in der dem Lichtbogen nachlaufenden Umgebung der Fall, wo die Schweißraupe 26 bereits erstarrt oder zumindest teilweise erstarrt ist. Entsprechend können durch Einstellung eines Aufnahmebereichs bzw. des Ausschnitts des Überwachungssystems 27 die markanten Punkte bzw. die Position des Ausschnitts Pᵢ₋₁' eingestellt werden. Als Ergebnis der Berechnung resultiert die Verschiebung Δ̅*̅d̅*̅ zwischen zwei markanten Punkten X in den Ausschnitten Pᵢ₋₁', Pᵢ der Bilder Pᵢ₋₁, Pᵢ im zweidimensionalen Raum. Die Verschiebung Δ̅*̅d̅*̅ bzw. der Verschiebungsvektor besitzt eine Komponente Δdₓ in x-Richtung und eine Komponente Δd_{y} in y-Richtung.

Gemäß dem erfindungsgemäßen Verfahren wird nun das aktuelle Bild Pᵢ gegenüber dem vorigen Bild Pᵢ₋₁ um jenen Anteil Δd' bzw. Betrag der Verschiebung Δ̅*̅d̅*̅ bzw. des Verschiebungsvektors, der die Pendelbewegung beinhaltet, in Richtung der Pendelbewegung (oder auch in die entgegengesetzte Richtung), gemäß der aus den Ausschnitten Pᵢ' der Bilder Pᵢ ermittelten Verschiebung Δ̅*̅d̅*̅ verschoben. Dies deshalb, da ja die Schweißraupe 26 im Ausschnitt Pᵢ' bzw. im Bild Pᵢ gegen die Pendelbewegung bewegt wird und somit in Pendelbewegung nachgeführt werden muss. Die Schweißraupe 26 wird also im Bild Pᵢ derart verschoben, dass diese mit der Schweißraupe 26 des vorigen Bildes Pᵢ₋₁ deckungsgleich ist. Somit wird die durch die Pendelbewegung resultierende Bewegung der Schweißraupe 26 eliminiert und es bleibt die reine Vorwärtsbewegung sichtbar.

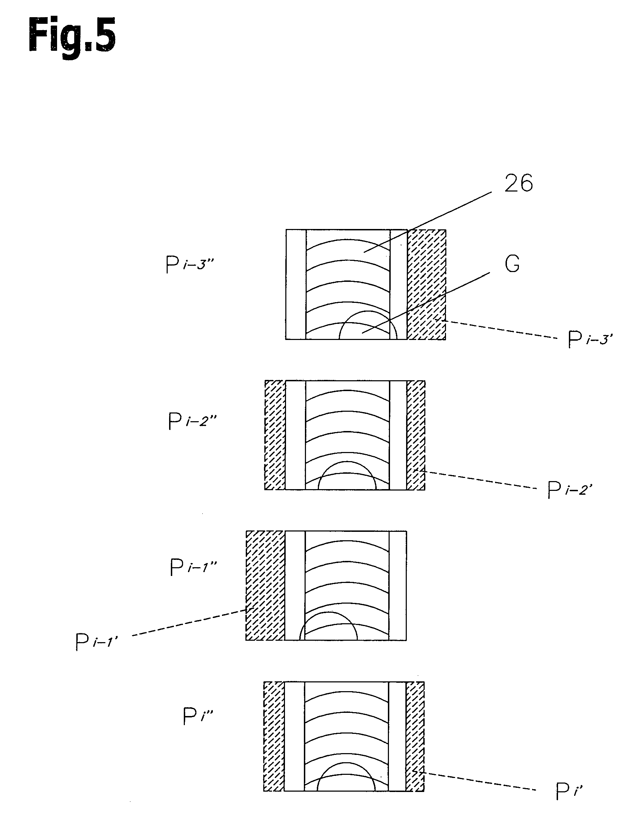

Als Resultat ergibt sich eine Bildfolge wie in Fig. 5 dargestellt. Die Schweißraupe 26 befindet sich somit in allen Bildern im Wesentlichen in der Mitte und führt keine Bewegung aus. Die Pendelbewegung der Schweißraupe 26 wurde aus den Bildern Pᵢ eliminiert. Um zu vermeiden, dass sich die Ränder der Bilder bei der Darstellung hin- und herbewegen bzw. undeutliche Bereiche in den Bildern resultieren, werden nur Teilbilder Pᵢ" dargestellt. Dabei erfolgt eine Beschneidung der Bilder Pᵢ an deren Rändern gemäß den schraffierten Flächen jeweils um zumindest die Pendelamplitude. In den Teilbildern Pᵢ" ist der zur Berechnung der Verschiebung allenfalls ausgeblendete Bereich, wie beispielsweise die Gasdüse G, wieder dargestellt. Dadurch dass die Schweißraupe 26 verschoben wurde, wird der ausgeblendete Bereich ebenso entsprechend um den Anteil Δd' der Verschiebung Δ̅*̅d̅*̅, der die Pendelbewegung beinhaltet, verschoben. Damit wird erreicht, dass der Benutzer die stillstehende Schweißraupe 26 gut sehen kann und gleichzeitig die Pendelbewegung der Gasdüse G hieraus entnehmen kann. Somit werden mit dem erfindungsgemäßen Verfahren die mit dem Überwachungssystem 27 erfassten Bewegungen der Schweißraupe 26 auf den Brenner 7 übertragen.

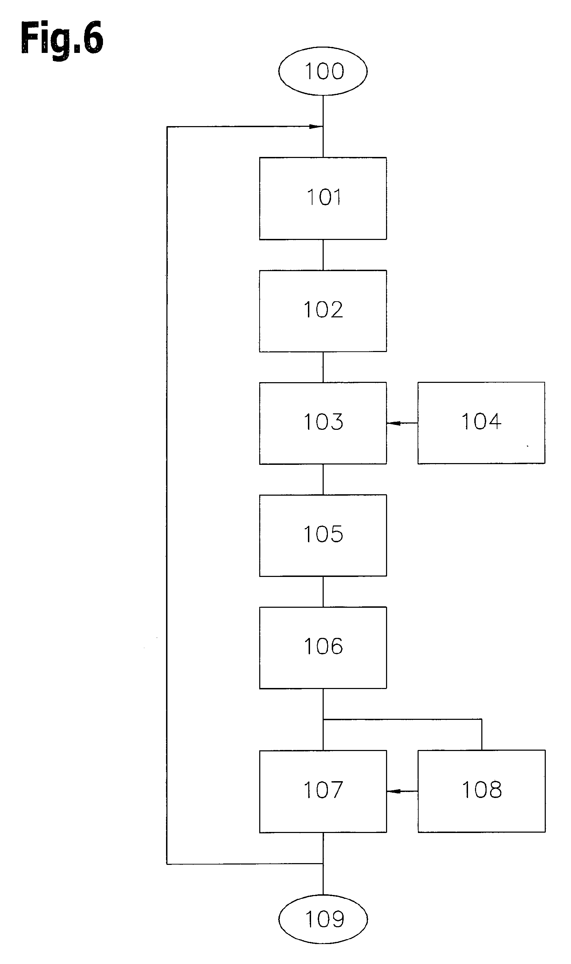

Fig. 6 zeigt eine Ausführungsform des erfindungsgemäßen Verfahrens anhand eines Flussdiagramms. Nach Beginn der Überwachung des Lichtbogenprozesses entsprechend Schritt 100 wird das erste Bild Pᵢ, welches mit dem Überwachungssystem aufgenommen wurde oder zwischengespeichert wurde, geladen (Schritt 101). In einem optionalen Verarbeitungsschritt 102 kann das Bild Pᵢ gefiltert oder skaliert werden. Mit dem dabei gebildeten Ausschnitt Pᵢ' des Bildes Pᵢ, bei welchem beispielsweise zumindest die Gasdüse ausgeblendet wird, wird die nachfolgende Verarbeitung erleichtert. Gemäß Schritt 103 wird aus den Ausschnitten Pᵢ', Pᵢ₋₁' der aktuellen Bilder Pᵢ und des vorigen Bildes Pᵢ₋₁ (Schritt 104) die Verschiebung Δ̅*̅d̅*̅ bzw. der Verschiebungsvektor ermittelt, was durch ein Kreuzkorrelationsverfahren geschehen kann. Gemäß Schritt 105 wird das aktuelle Bild Pᵢ um den ermittelten Anteil Δd' der Verschiebung Δ̅*̅d̅*̅ in Richtung der Pendelbewegung verschoben. Danach kann in einem weiteren Verarbeitungsschritt 106 ein Teilbild Pᵢ" des Bildes Pᵢ gebildet werden und dieses an einer Anzeigevorrichtung 31 dargestellt werden (siehe Schritt 107). Aus der Bildfolge kann gemäß Schritt 108 die tatsächliche Pendelfrequenz f_{P} ermittelt und ebenfalls an der Anzeigevorrichtung 31 dargestellt werden. Der Ablauf zwischen den Schritten 101 und 107 wird während des gesamten Lichtbogenprozesses wiederholt. Nach Beendigung des Lichtbogenprozesses wird das Verfahren entsprechend Schritt 109 beendet.

Das erfindungsgemäße Verfahren erlaubt eine optimale Überwachung eines Lichtbogenprozesses auch bei einer Pendelbewegung des Brenners 7, mit dem der Lichtbogen erzeugt wird. Das Überwachungssystem 27 ist am Brenner 7 befestigt und vollzieht mit diesem die Pendelbewegung. Die Bildauswertung erfolgt jedoch derart, dass durch eine Verschiebung der Bilder Pᵢ die Schweißraupe 26 stillstehend angezeigt wird, wodurch eine optimale Beobachtung des Schweißvorganges, insbesondere der Bildung der Schweißraupe 26, ermöglicht wird. Bevorzugt wird die Bildaufnahme derart eingerichtet, dass ein Teil des Brenners 7, insbesondere ein Teil der Gasdüse G, in das aufgenommene Bild Pᵢ hineinragt. Der Teil des Brenners 7 kann für die Berechnung der Verschiebung ausgeblendet werden, nicht jedoch im resultierenden Bild Pᵢ.

Der Aufnahmebereich wird bevorzugt derart gewählt, dass eine bestimmte Länge der erstarrten Schweißraupe 26 im Falle eines Schweißprozesses aufgenommen wird, da dadurch sichergestellt wird, dass markante Punkte für die Berechnung der Verschiebung in den aufgenommenen Bildern Pᵢ vorhanden sind, falls das Werkstück diese nicht beinhaltet. So kann beispielsweise die Schuppung der Schweißraupe 26 oder die sich bildende Schlacke als Anhaltspunkt verwendet werden. Beispielsweise wird 1/3 flüssige Schweißraupe und 2/3 erstarrte Schweißraupe im Bild Pᵢ aufgenommen.

## Patentansprüche

1. Verfahren zur Überwachung eines mit einem Brenner (7) durchgeführten Lichtbogenprozesses, insbesondere Schweißprozesses, wobei der Brenner (7) eine Pendelbewegung mit einer Pendelfrequenz (f_{P}) ausführt, und mit Hilfe eines mit dem Brenner (7) verbundenen, zumindest eine Kamera (28) umfassenden Überwachungssystems (27) Bilder (Pᵢ) der Umgebung des Lichtbogens (13) mit einer Bildwiederholfrequenz (f_{B}) aufgenommen werden und die Bilder (Pᵢ) auf einer Anzeigevorrichtung (31) dargestellt werden, **dadurch gekennzeichnet, dass** eine Verschiebung ( Δ̅*̅d̅*̅) des aktuellen Bildes (Pᵢ) zum vorherigen Bild (Pᵢ₋₁) ermittelt wird, das aktuelle Bild (Pᵢ) um den Anteil (Δd') der ermittelten Verschiebung ( Δ̅*̅d̅*̅) in Richtung der Pendelbewegung verschoben, und das verschobene aktuelle Bild (Pᵢ) angezeigt wird.

2. Verfahren nach Anspruch 1, **dadurch gekennzeichnet, dass** die Verschiebung durch Korrelation des aktuellen Bildes (Pᵢ) mit dem vorigen Bild (Pᵢ₋₁) ermittelt wird.

3. Verfahren nach Anspruch 1 oder 2, **dadurch gekennzeichnet, dass** die Bilder (Pᵢ) der dem Lichtbogen (13) nachlaufenden Umgebung aufgenommen werden.

4. Verfahren nach einem der Ansprüche 1 bis 3, **dadurch gekennzeichnet, dass** vor der Ermittlung der Verschiebung ( Δ̅*̅d̅*̅) Ausschnitte (Pᵢ₋₁', Pᵢ') des vorigen und allenfalls aktuellen Bildes (Pᵢ₋ₗ₁ Pᵢ) gebildet werden.

5. Verfahren nach einem der Ansprüche 1 bis 4, **dadurch gekennzeichnet, dass** die Bilder (Pᵢ) vor der Ermittlung der Verschiebung ( Δ̅*̅d̅*̅) gefiltert und skaliert werden.

6. Verfahren nach einem der Ansprüche 1 bis 5, **dadurch gekennzeichnet, dass** ein Teilbild (Pᵢ'') des Bildes (Pᵢ) angezeigt wird.

7. Verfahren nach einem der Ansprüche 1 bis 6, **dadurch gekennzeichnet, dass** eine Drift der Summe der ermittelten Verschiebungen ( Δ̅*̅d̅*̅) ermittelt und korrigiert wird.

8. Verfahren nach einem der Ansprüche 1 bis 7, **dadurch gekennzeichnet, dass** der Lichtbogen (13) abgeschattet wird.

9. Verfahren nach einem der Ansprüche 1 bis 8, **dadurch gekennzeichnet, dass** die tatsächliche Pendelfrequenz (f_{P}) aus den Bildern (Pᵢ) ermittelt und vorzugsweise zusammen mit den Bildern (Pᵢ) oder Teilbildern (Pᵢ'') angezeigt wird.

10. Verfahren nach einem der Ansprüche 1 bis 9, **dadurch gekennzeichnet, dass** die Bildwiederholfrequenz (f_{B}) zumindest doppelt so groß wie die Pendelfrequenz (f_{P}) gewählt wird.

11. Verfahren nach einem der Ansprüche 1 bis 10, **dadurch gekennzeichnet, dass** zusätzlich zu den Bildern (Pᵢ) oder Teilbildern (Pᵢ'') Prozessparameter angezeigt werden.

12. Vorrichtung zur Durchführung eines Verfahrens zur Überwachung eines mit einem eine Pendelbewegung mit einer Pendelfrequenz (f_{P}) ausführenden Brenner (7) durchgeführten Lichtbogenprozesses, insbesondere Schweißprozesses, nach einem der Ansprüche 1 bis 11, mit einem mit dem Brenner (7) verbundenen, zumindest eine Kamera (28) umfassenden Überwachungssystem (27) zur Aufnahme von Bildern (Pᵢ) der Umgebung des Lichtbogens (13) mit einer Bildwiederholfrequenz (f_{B}), und einer Anzeigevorrichtung (31) zur Darstellung der Bilder (Pᵢ), **dadurch gekennzeichnet, dass** eine Einrichtung (30) zur Verarbeitung der aufgenommenen Bilder (Pᵢ) vorgesehen ist, welche Verarbeitungseinrichtung (30) zur Ermittlung der Verschiebung ( 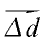 ) des aktuellen Bildes (Pᵢ) zum vorherigen Bild (Pᵢ₋₁) ausgebildet ist, und die Anzeigevorrichtung (31) zur Darstellung des um den Anteil (Δd') der ermittelten Verschiebung ( 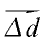 ) in Richtung der Pendelbewegung verschobenen aktuellen Bildes (Pᵢ) ausgebildet ist.

13. Vorrichtung nach Anspruch 12, **dadurch gekennzeichnet, dass** die Verarbeitungseinrichtung (30) zur Bildung einer Korrelation eines Ausschnittes (Pᵢ₋₁') des vorigen Bildes (Pᵢ₋₁) mit dem aktuellen Bild (Pᵢ) oder einem Ausschnitt (Pᵢ') des aktuellen Bildes (Pᵢ) ausgebildet ist.

14. Vorrichtung nach Anspruch 12 oder 13, **dadurch gekennzeichnet, dass** das Überwachungssystem (27) zur Aufnahme von Bildern (Pᵢ) der dem Lichtbogen (13) nachlaufenden Umgebung am Brenner (7) befestigt ist.

15. Vorrichtung nach einem der Ansprüche 12 bis 14, **dadurch gekennzeichnet, dass** am Brenner (7) eine Einrichtung zur Abschattung des Lichtbogens (13) angeordnet ist.

## Claims

1. A method for monitoring an arc process carried out by a torch (7), in particular a welding process, wherein the torch (7) performs a pendular movement with a pendular frequency (f_{P}) and images (Pᵢ) of the surroundings of the arc (13) are recorded at an image repetition frequency (f_{B}) by means of a monitoring system (27) connected to the torch (7) and comprising at least one camera (28), and the images (Pᵢ) are displayed on a display device (31), **characterised in that** an offset (Δ̅*̅d̅*̅) of the current image (Pᵢ) with respect to the previous image (Pᵢ₋₁) is determined, the current image (Pᵢ) is offset by the share (Δd') of the determined offset (Δ̅*̅d̅*̅) in the direction of the pendular movement and the offset current image (Pᵢ) is displayed.

2. The method according to claim 1, **characterised in that** the offset is determined by correlating the current image (Pᵢ) with the previous image (Pᵢ₋₁).

3. The method according to claim 1 or 2, **characterised in that** the images (Pᵢ) of the surroundings behind the arc (13) are recorded.

4. The method according to any one of claims 1 to 3, **characterised in that** sectors (Pᵢ-₁', Pᵢ') of the previous and possibly the current image (Pᵢ₋₁, Pᵢ) are formed before determining the offset (Δ̅*̅d̅*̅).

5. The method according to any one of claims 1 to 4, **characterised in that** the images (Pᵢ) are filtered and scaled before determining the offset (Δ̅*̅d̅*̅).

6. The method according to any one of claims 1 to 5, **characterised in that** a partial image (Pᵢ'') of the image (Pᵢ) is displayed.

7. The method according to any one of claims 1 to 6, **characterised in that** a drift of the sum of the determined offsets (Δ̅*̅d̅*̅) is determined and corrected.

8. The method according to any one of claims 1 to 7, **characterised in that** the arc (13) is being shaded.

9. The method according to any one of claims 1 to 8, **characterised in that** the actual pendular frequency (f_{P}) is determined from the images (Pᵢ) and preferably displayed together with the images (Pᵢ) or partial images (Pᵢ'').

10. The method according to any one of claims 1 to 9, **characterised in that** the image repetition frequency (f_{B}) is selected to be at least twice as high as the pendular frequency (f_{P}).

11. The method according to any one of claims 1 to 10, **characterised in that** process parameters are displayed in addition to the images (Pᵢ) or partial images (Pᵢ'').

12. A device for performing a method for monitoring an arc process carried out by a torch (7) performing a pendular movement with a pendular frequency (f_{P}), in particular a welding process, according to any one of claims 1 to 11, having a monitoring system (27) connected to the torch (7) and comprising at least one camera (28) for recording images (Pᵢ) of the surroundings of the arc (13) at an image repetition frequency (f_{B}) and a display device (31) for displaying the images (Pᵢ), **characterised in that** a means (30) for processing the recorded images (Pᵢ) is provided, which processing means (30) is configured for determining the offset
(Δ̅*̅d̅*̅) of the current image (Pᵢ) with respect to the previous image (Pᵢ₋₁), and the display device (31) is configured for displaying the current image (Pᵢ) offset by the share (Δd') of the determined offset (Δ̅*̅d̅*̅) in the direction of the pendular movement.

13. The device according to claim 12, **characterised in that** the processing means (30) is configured for establishing a correlation of a sector (Pᵢ₋₁') of the previous image (Pᵢ₋₁) with the current image (Pᵢ) or a sector (Pᵢ') of the current image (Pᵢ).

14. The device according to claim 12 or 13, **characterised in that** the monitoring system (27) for recording images (Pᵢ) of the surroundings behind the arc (13) is attached to the torch (7).

15. The device according to any one of claims 12 to 14, **characterised in that** a means for shading the arc (13) is arranged on the torch (7).

## Revendications

1. Procédé pour la surveillance d'un procédé à arc électrique effectué avec un brûleur (7), plus particulièrement d'un procédé de soudure, le brûleur (7) effectuant un mouvement pendulaire (f_{P}) et, à l'aide d'un système de surveillance (27) comprenant au moins une caméra (28), des images (Pᵢ) de l'environnement de l'arc électrique (13) étant prises avec une fréquence de répétition d'images (f_{B}) et les images (Pᵢ) étant représentées sur un dispositif d'affichage (31), **caractérisé en ce qu'**un décalage ( &d ) de l'image actuelle (Pᵢ) par rapport à l'image précédente (Pᵢ₋₁) est déterminé, l'image actuelle (Pᵢ) est décalée de la part (Δd') du décalage ( Δ̅*̅d̅*̅ ) déterminé en direction du mouvement pendulaire, et l'image actuelle (Pᵢ) décalée est affichée.

2. Procédé selon la revendication 1, **caractérisé en ce que** le décalage est déterminé par corrélation de l'image actuelle (Pᵢ) avec l'image précédente (Pᵢ₋₁).

3. Procédé selon la revendication 1 ou 2, **caractérisé en ce que** les images (Pᵢ) de l'environnement suivant l'arc électrique (13) sont prises.

4. Procédé selon l'une des revendications 1 à 3, **caractérisé en ce que**, avant la détermination du décalage (Δ̅*̅d̅*̅), des découpes (P_{i-1'}, Pᵢ') de l'image précédente et de l'image actuelle (Pᵢ₋₁, Pᵢ).ont été effectuées.

5. Procédé selon l'une des revendications 1 à 4, **caractérisé en ce que** les images (Pᵢ) sont filtrées et mises à l'échelle avant la détermination du décalage ( Δ̅*̅d̅*̅ )

6. Procédé selon l'une des revendications 1 à 5, **caractérisé en ce qu'**une image partielle (Pᵢ") de l'image (Pᵢ) est affichée ;

7. Procédé selon l'une des revendications 1 à 6, **caractérisé en ce qu'**une dérive de la somme des décalages ( Δ̅*̅d̅*̅ ) est déterminée et corrigée.

8. Procédé selon l'une des revendications 1 à 7, **caractérisé en ce que** l'arc électrique (13) est obscurci.

9. Procédé selon l'une des revendications 1 à 8, **caractérisé en ce que** la fréquence pendulaire (f_{P}) réelle est déterminée à partir des images (Pᵢ) et de préférence affichée ensemble avec les images (Pᵢ) ou les images partielles (Pᵢ").

10. Procédé selon l'une des revendications 1 à 9, **caractérisé en ce que** la fréquence de répétition d'images (f_{B}) est au moins deux fois plus importante que la fréquence pendulaire (f_{P}).

11. Procédé selon l'une des revendications 1 à 10, **caractérisé en ce que**, en plus des images (Pᵢ) ou des images partielles (Pᵢ"), des paramètres de processus sont affichés.

12. Dispositif pour la réalisation d'un procédé de surveillance d'un processus à arc électrique effectué avec un brûleur (7) effectuant un mouvement pendulaire avec une fréquence pendulaire (f_{P}), plus particulièrement d'un processus de soudure, selon l'une des revendications 1 à 11, avec un système de surveillance (27), relié au brûleur (7), comprenant au moins une caméra (28) pour la prise d'images (Pᵢ) de l'environnement de l'arc électrique (13) avec une fréquence de répétition d'images (f_{B}) et un dispositif d'affichage (31) pour la représentation des images (Pᵢ), **caractérisé en ce qu'**un dispositif (30) pour le traitement des images (Pᵢ) prises est prévu, ce dispositif de traitement (30) étant conçu pour la détermination du décalage ( Δ̅*̅d̅*̅ ) de l'image actuelle (Pᵢ) par rapport à l'image précédente (Pᵢ₋₁) et le dispositif d'affichage (31) étant conçu pour la représentation de l'image actuelle (Pᵢ) décalé de la part (Δd') du décalage ( Δ̅*̅d̅*̅ ) déterminé en direction du mouvement pendulaire.

13. Dispositif selon la revendication 12, **caractérisé en ce que** le dispositif de traitement (30) est conçu pour la formation d'une corrélation d'un extrait (Pᵢ₋₁') de l'image précédente (Pᵢ₋₁) avec l'image actuelle (Pᵢ) ou un extrait (Pᵢ') de l'image actuelle (Pᵢ).

14. Dispositif selon la revendication 12 ou 13, **caractérisé en ce que** le système de surveillance (27) est fixé au brûleur (7) pour la prise d'images (Pᵢ) de l'environnement suivant l'arc électrique (13).

15. Dispositif selon l'une des revendications 12 à 14, **caractérisé en ce que**, sur le brûleur (7), se trouve un dispositif pour l'obscurcissement de l'arc électrique (13).
